# EUROPEAN PATENT APPLICATION

(11) **EP 4 589 223 A1**
(43) Date of publication of application: **23.07.2025**
(21) Application number: 24153063.3
(22) Date of filing: 22.01.2024
(51) Int. Cl.: F25D 17/04, B65G 1/00

(54) **AN AIRFLOW CONTROL DEVICE**

(71) Applicant: AUTOSTORE TECHNOLOGY AS, 5578 Nedre Vats (NO)
(72) Inventor: Bersaas, Paul Edvin, Nedre Vats (NO); Verpe, Espen, Nedre Vats (NO)
(74) Representative: Kilburn & Strode LLP

(57) **Abstract**

An air flow control device for controlling an air flow being introduced to a refrigerated zone of a storage volume in a storage and retrieval system, said air flow control device being configured to be mounted in an orifice of an air duct to distribute the air transversally into an air release volume of the refrigerated zone, the flow control device comprising a main body portion having a face with first airflow apertures of a first configuration, wherein said air flow control device further comprises a de-icing portion comprising second apertures having a second configuration arranged to create a pressure differential across the air duct face.

## Description

### TECHNICAL FIELD

The disclosure relates to an airflow control device. More particularly, it relates to an airflow control device and an automated, grid-based storage and retrieval system including such a device.

### BACKGROUND

Traditional storage solutions usually involve the arrangement of goods on rows of shelves within a warehouse. The shelf location for each item is recorded in an inventory, and goods are retrieved from the shelves by a stock picker. The shelves are restocked and the inventory updated, as needed, as goods enter and leave the warehouse.

Warehouse workers may be assisted by robotic pickers and by automated inventory management systems. Automated transit systems may also be implemented in traditional warehouse set-ups to move goods from their inventory location to a picking and/or packing station.

An alternative to a traditional warehouse set-up is an automated storage and retrieval system in which robots retrieve items from their logged location within the warehouse and deliver the items to a packing station or port. Such systems can reduce or eliminate the space needed to pass between rows of shelves to access stock, thereby removing the need for broad aisles within the warehouse. One example of such a system involves placing goods in bins or containers that are configured to be stacked, side by side, within a three-dimensional grid. A rail system is arranged on top of the grid, along which robotic container-handling vehicles configured to lift containers from the grid can travel. The container-handling vehicles are configured to transport containers from the grid and to deliver them to ports or stations at the periphery of the grid so that the goods within the container can be picked and packed.

Such storage and retrieval systems can be employed to store frozen goods such as frozen food products. However, a region of the storage and retrieval system above the rail system, where the container-handling vehicles move, needs to be kept at a comparably higher temperature in order to safeguard the vehicle's initial normal operation, for example, to avoid ice build-up on the rails.

A storage and retrieval system featuring a temperature controlled environment is disclosed in WO2023/110561.

One or more aspects of the invention of the present application are set out in the claims.

### BRIEF DESCRIPTION OF THE DRAWINGS

The disclosure will now be described in more detail in connection with a number of exemplary embodiments shown in the accompanying drawings, in which:
Fig. 1 shows a perspective view of a storage system comprising a grid and a plurality of robotic container-handling vehicles configured to retrieve and/or rearrange goods stored within the grid;
Fig. 2 shows a top view of the system of Fig. 1;
Fig. 3A shows a side view of a first robotic container-handling vehicle suitable for use in the system of Fig. 1;
Fig. 3B shows a side view of a second robotic container-handling vehicle suitable for use in the system of Fig. 1;
Fig. 3C is a perspective side view of the robot of Fig. 3B;
Fig. 4 shows a computing device for implementing the operations described herein;
Fig. 5 shows a schematic side view of a temperature controlled storage system;
Fig. 6 is a perspective of a system shown in Fig. 5;
Fig. 7A is a perspective view of the front, storage system facing side of an airflow control device; and
Fig. 7B is a perspective view of a rear side of an airflow control device.

### DETAILED DESCRIPTION

In overview, the disclosure relates to an airflow control device for the refrigerated zone of a storage and retrieval system distributing air from an air duct via first air flow apertures in the face of a main body portion. A de-icing portion comprises second apertures having a second (different) configuration from the first apertures arranged to create a pressure differential across the air duct face, that is, along the face and perpendicular to the air flow direction. As a result, pressure control is shifted to the outlets and in particular ice build up can be spotted and removed or avoided, as opposed to the situation with internal valves in an air channel. Because the pressure drop is predefined on the outlet, no further calculated pressure drop distribution is required. Additionally, internal valves that differentiate pressure and control air distribution are not required. By creating a predefined pressure drop over the freezing air distribution valve, equal amounts of air are distributed along the freezing air channel and into the freezer, avoiding problems with disproportionate air distribution or uneven temperature in the freezer section, potentially increasing energy consumption. As a result, the software, mechanical and electrical components of the robots or adjacent bins in the chilled temperature zone are not influenced without requiring physical separation of areas into separate climate rooms, or creating a frozen environment for robots and operators.

### Automated storage and retrieval system overview

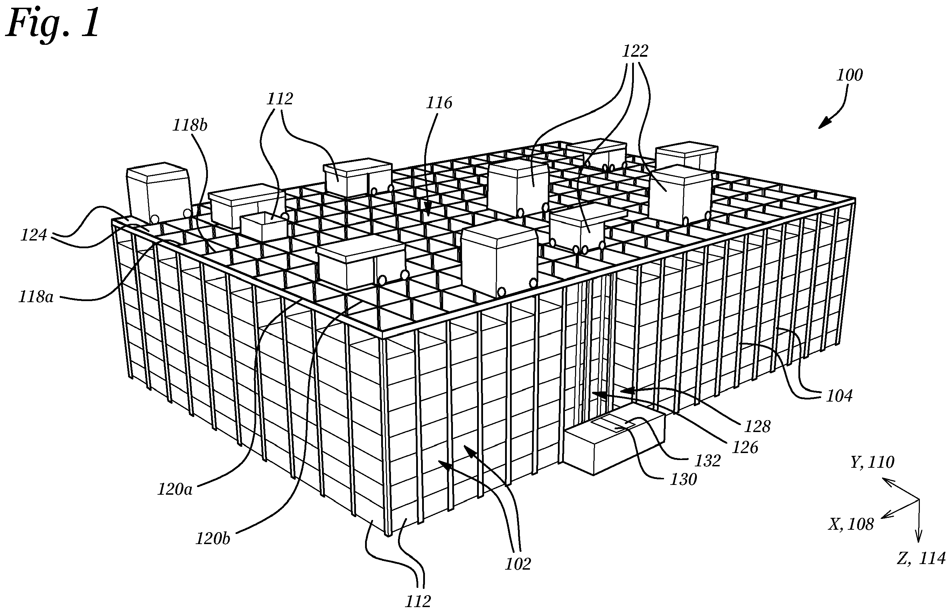

Referring to the embodiment shown in Fig. 1, a grid 100 comprises a frame formed by a plurality of generally rectilinear, adjacent vertical columns 102 formed between vertical frame members 104 and extending in the X and Y directions 108, 110. The grid elements may be fabricated of any appropriate material; for example, the frame members may be formed of extruded aluminium. Storage containers or bins 112 are stacked on top of each other, preferably in a self-supporting manner, in the Z direction 114 in the columns 102, forming a storage volume of storage cells for respective bins 112 extending in the X, Y and Z directions 108, 110, 114.

A rail system or network 116 is formed on top of the grid 100 and comprises pairs of vehicle rails or tracks 118a, 118b and 120a, 120b, respectively extending in the X and Y directions 108, 110. Robotic container-handling vehicles, or robots, 122, which can be of a range of size, shape and function, are provided and configured to run on the rails 118, 120 and to transport bins 112 in both the X and Y directions 108, 110. The robots 122 are additionally configured to lift and lower bins 112 from/into the columns 102 in the Z direction 114, the bins 112 optionally being guided by the vertical frame members 104. The robots 122 access the bins 112 via access openings 124 above the columns 102 and formed between the rails 118, 120.

Some columns 102 may be used for alternative purposes than bin storage. For example, port columns 126, 128 comprise port or access columns allowing transfer of a bin 112 in and/or out of the grid 100. Port columns 126, 128 provide a vertical channel for lifting of a bin 112 from, or lowering of a bin 112 to, a port or ports 130, 132. The ports 130, 132 are shown in Fig. 1 at the lowest level of the grid, however ports can be located at any vertical position along the column. The respective port columns 126, 128 can be assigned for removing ('drop-off) and/or returning or delivering ('pick-up') bins 112 from/to the grid 100. The ports 130, 132 are therefore configured to allow bins 112 to be removed and reintroduced (horizontally) into the associated port column. As such, a port 130, 132 can comprise a conveyor (not shown in Fig. 1) onto which a bin 112 may be lowered and transported horizontally out of the port column. The port columns 126, 128 include an opening or access point through which bins 112 can enter and leave the column.

Bins 112 can be transported along the top of the grid 100 to and/or from a port column 126, 128 by robots 122, and from a port 130, 132 to a location outside the grid 100, which may be an access station (not shown) for processing of the bin 112 or its contents, such as a picking station for adding content to, or removing content from, the bin 112. In alternative examples (not shown), the bin 112 may be transported to a port of another grid on the same or another level, or to an external facility. Transport of bins 112 to and from ports 130, 132 may be by any appropriate means (not shown) including conveyors, transport vehicles, lifts or robots.

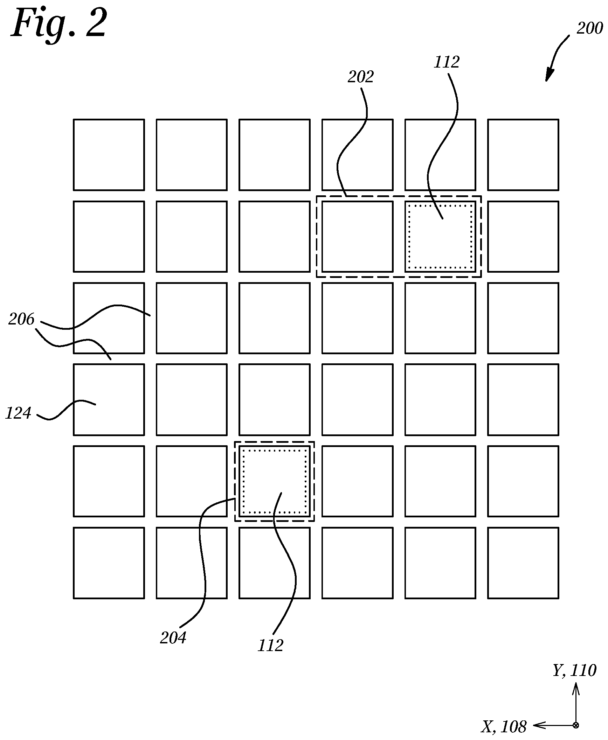

Referring to the embodiment shown in Fig. 2, the X-Y configuration 200 of the rail system 116 can be seen in more detail, together with robots 202, 204 of different types. The rail system includes rails 206 defining between them vertical column access openings 124 for access to bins 112. The rails 206 can be any appropriate type for permitting travel of the robots 202, 204 in the X and Y directions 108, 110 thereon, including (not shown) groove-type rails for receiving vehicle wheels, or protrusion-type rails for engaging wheel recesses. Each rail 206 may comprise a single track or multiple parallel tracks in each of the X and Y directions 108, 110.

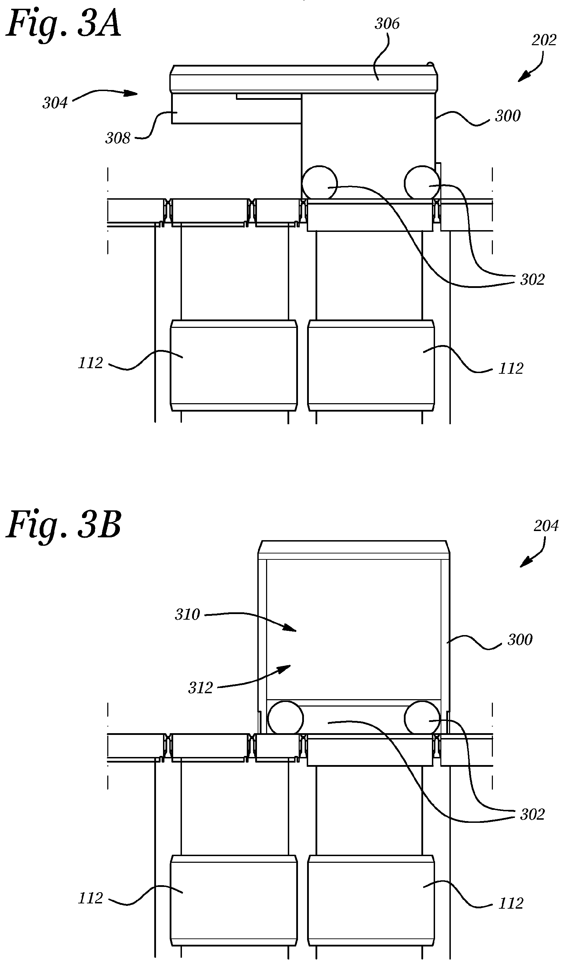

A first, 'cantilever' type of robot 202 is shown in more detail in Fig. 3A and includes a body 300, a set of wheels 302 and a lifting device 304. The body 300 contains operational equipment (not shown) for the robot 202 including drive, power and control systems. The wheels 302 permit movement of the robot 202 in one of the X and Y directions, an additional set of wheels (not visible in this view) permitting movement in the other of the X and Y directions, in both cases along the respective rails or tracks 206. One or both sets of wheels can be raised or lowered to permit selective engagement of the rails for movement in the desired direction. The lifting device 304 includes a cantilever element 306 extending in the X-Y plane from the top of the body 300, and a gripping device 308, which is raisable and lowerable from the cantilever element 306. The gripping device 308 is configured to grip or engage a bin 112; for example, by gripping a part of the bin 112, or by passively or actively engaging a suitably configured part of the bin 112.

A second, 'internal cavity' type of robot 204 is shown in more detail in Fig. 3B and includes, as an alternative to the cantilevered lifting system, an internal cavity 310 within the body 300 and in which the lifting device 312 including a gripping device (not shown) is located. In this case, the body 300 includes the robot's operational equipment and a storage space for one or more bins 112, for use, for example, while transporting the bin 112.

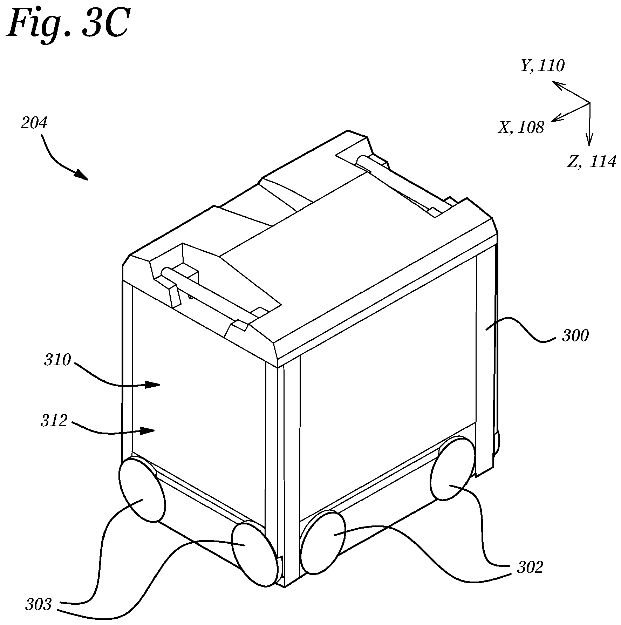

Fig. 3C shows a perspective side view of the robot of Fig. 3B in which the first set of wheels 302 from Fig. 3B are visible. The additional set of wheels referenced above but not shown in Fig. 3B are shown as wheels 303 in Fig. 3C. The additional set of wheels 303 is arranged perpendicular to the first set of wheels 302, to allow rolling of the robot 204 in the X and Y directions on the first and second set of wheels 302, 303 respectively. The first and second set of wheels 302, 303 shown in Fig. 3C may be configured to be independently lowered into engagement with the rails (and conversely raised out of engagement with the rails) to allow the robot 202 to move in the X and Y direction across the arrangement of rails shown in Fig. 2. Although the perspective view shown in Fig. 3C is of the robot 204 of Fig. 3B, it will be appreciated that a similar perpendicular wheel arrangement may be applied to the robot 202 of Fig. 3A.

### Control and monitoring system

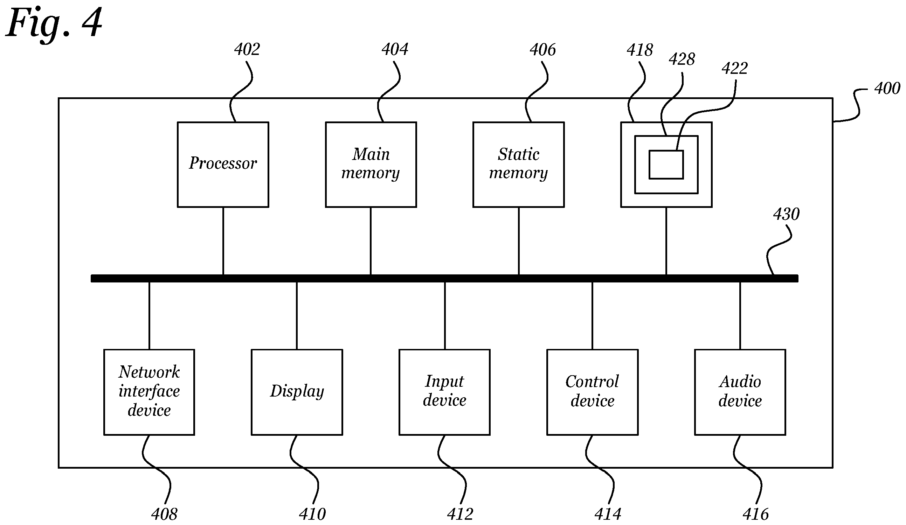

Control and monitoring of the automated storage and retrieval system, including monitoring and storing bin position and controlling bin delivery, retrieval and transport and robot routing and collision avoidance, is performed by a control system shown in Fig. 4 in communication with the robots and/or other controllable system components. Control can be performed locally or remotely and may be implemented by a processing system, for example in the form of a computing device. Accordingly, the methods described herein may form all or part of a computer-implemented method, or a system configured to perform the methods described herein.

With reference to Fig. 4, a processing system 400 suitable for carrying out the methods described herein will now be described. Fig. 4 shows a block diagram of one implementation of a processing system 400 in the form of a computing device within which a set of instructions for causing the computing device to perform any one or more of the methods described herein may be executed. In some implementations, the computing device may be connected (e.g., networked) to other machines in a Local Area Network (LAN), an intranet, an extranet, or the Internet. The computing device may operate in the capacity of a server or a client machine in a client-server network environment, or as a peer machine in a peer-to-peer (or distributed) network environment. The computing device may be a personal computer (PC), a tablet computer, a set-top box (STB), a Personal Digital Assistant (PDA), a cellular telephone, a web appliance, a server, a network router, switch or bridge, or any machine capable of executing a set of instructions (sequential or otherwise) that specify actions to be taken by that machine. Further, while only a single computing device is illustrated, the term 'computing device' shall also be taken to include any collection of machines (e.g., computers) that individually or jointly execute a set (or multiple sets) of instructions to perform any one or more of the methods described herein.

The example processing system 400 includes a processor 402, a main memory 404 (e.g., read-only memory (ROM), flash memory, dynamic random-access memory (DRAM) such as synchronous DRAM (SDRAM) or Rambus DRAM (RDRAM), etc.), a static memory 406 (e.g., flash memory, static random-access memory (SRAM), etc.), and a secondary memory (e.g., a data storage device 418), which communicate with each other via a bus 430.

Processor 402 represents one or more general-purpose processors such as a microprocessor, central processing unit, or the like. More particularly, the processor 402 may be a complex instruction set computing (CISC) microprocessor, reduced instruction set computing (RISC) microprocessor, very long instruction word (VLIW) microprocessor, processor implementing other instruction sets, or processors implementing a combination of instruction sets. Processor 402 may also be one or more special-purpose processors such as an application specific integrated circuit (ASIC), a field programmable gate array (FPGA), a digital signal processor (DSP), network processor, or the like. Processor 402 is configured to execute the processing logic (instructions 422) for performing the operations and steps described herein.

The processing system 400 may further include a network interface device 408. The processing system 400 also may include any of a video display unit 410 (e.g., a liquid crystal display (LCD) or a cathode ray tube (CRT)), an alphanumeric input device 412 (e.g., a keyboard or touchscreen), a cursor control device 414 (e.g., a mouse or touchscreen), and an audio device 416 (e.g., a speaker).

It will be apparent that some features of the processing system 400 shown in Fig. 4 may be absent. For example, the processing system 400 may have no need for display device 410 (or any associated adapters). This may be the case, for example, for particular server-side computer apparatuses which are used only for their processing capabilities and do not need to display information to users. Similarly, user input device 412 may not be required. In its simplest form, processing system 400 comprises processor 402 and main memory 404.

The data storage device 418 may include one or more machine-readable storage media (or more specifically one or more non-transitory computer-readable storage media) 428 on which is stored one or more sets of instructions 422 embodying any one or more of the methods or functions described herein. The instructions 422 may also reside, completely or at least partially, within the main memory 404 and/or within the processor 402 during execution thereof by the processing system 400, the main memory 404 and the processor 402 also constituting computer-readable storage media 428.

The various methods described herein may be implemented by a computer program. The computer program may include computer code arranged to instruct a computer to perform the functions of one or more of the various methods described herein. The computer program and/or the code for performing such methods may be provided to an apparatus, such as a computer, on one or more computer-readable media or, more generally, a computer program product. The computer-readable media may be transitory or non-transitory. The one or more computer-readable media could be, for example, an electronic, magnetic, optical, electromagnetic, infrared, or semiconductor system, or a propagation medium for data transmission, for example for downloading the code over the Internet. Alternatively, the one or more computer-readable media could take the form of one or more physical computer-readable media such as semiconductor or solid-state memory, magnetic tape, a removable computer diskette, a random-access memory (RAM), a read-only memory (ROM), a rigid magnetic disc, or an optical disk, such as a CD-ROM, CD-R/W or DVD.

The computer program is executable by the processor 402 to perform functions of the systems and methods described herein.

In an implementation, the modules, components, and other features described herein can be implemented as discrete components or integrated in the functionality of hardware components such as ASICS, FPGAs, DSPs, or similar devices.

A 'hardware component' is a tangible (e.g., non-transitory) physical component (e.g., a set of one or more processors) capable of performing certain operations and may be configured or arranged in a certain physical manner. A hardware component may include dedicated circuitry or logic that is permanently configured to perform certain operations. A hardware component may be or include a special-purpose processor, such as a field programmable gate array (FPGA) or an ASIC. A hardware component may also include programmable logic or circuitry that is temporarily configured by software to perform certain operations.

Accordingly, the phrase 'hardware component' should be understood to encompass a tangible entity that may be physically constructed, permanently configured (e.g., hardwired), or temporarily configured (e.g., programmed) to operate in a certain manner or to perform certain operations described herein.

In addition, the modules and components can be implemented as firmware or functional circuitry within hardware devices. Further, the modules and components can be implemented in any combination of hardware devices and software components, or only in software (e.g., code stored or otherwise embodied in a machine-readable medium or in a transmission medium).

### Operation of the automated storage and retrieval system

In operation, each bin 112 is given a unique identifier, which maybe marked on the bin 112 using a computer-readable identifier (e.g., a barcode, quick-response code or radio-frequency identification tag) to ease identification of the bin 112. A database of the processing system 400 stores, in association with the unique identifier, the position and, optionally, content of each bin 112. When a bin 112 is moved (e.g., when it is retrieved from the grid 100), the database is updated to record its change in position.

When it is desired to retrieve a bin 112 from the grid 100, under control of the processing system 400, a robot 202, 204 is routed via the rail system 116 to the vertical column 102 including the storage cell where, according to the database, the bin 112 is positioned, and the lifting device 304, 312 is positioned (according to robot type) over the corresponding access opening 124, either adjacent or below the robot 202, 204. The robot 202, 204 lowers the gripping device 308 which engages, grips and lifts the bin 112 to the robot 202, 204. The robot 202, 204 then transports the bin 112, for example, to the drop-off port column 126, 128 for delivery to the port 130, 132 and subsequent processing external to the grid 100. In the event that the target or designated bin 112 is below other bins in the stack then the robot 202, 204 or multiple robots, which may be dedicated to the task, are controlled in a 'digging' operation to sequentially lift and reposition, temporarily or permanently, bins above the target bin 112 in order for it to be retrieved. It will be appreciated that other operations in relation to the bin 112 can be carried out in a similar manner. For example, a bin 112 can be delivered for storage in the grid 100 at the port 130, 132 of the pick-up port column 126, 128, gripped and lifted by a robot 202, 204 and delivered to the desired storage cell, bins above the desired position being repositioned if necessary as discussed above.

### Description of specific improvements

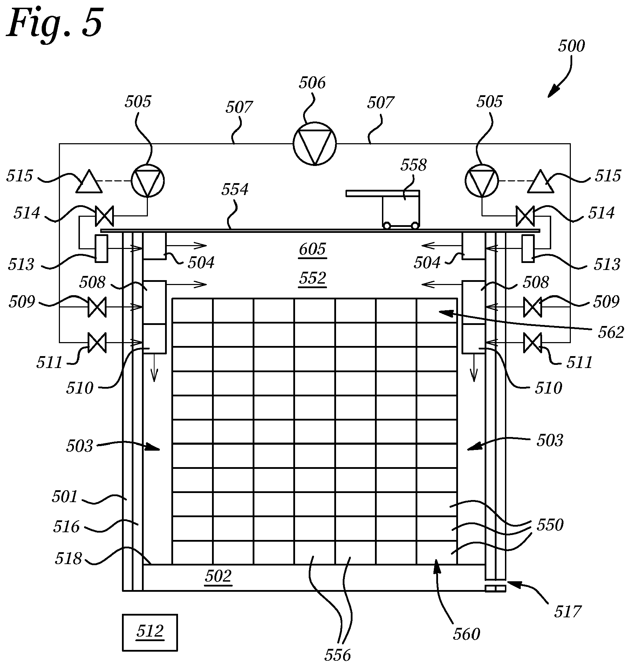

Fig. 5 is a schematic view of an automated storage and retrieval system according to an embodiment of the present invention comprising the previously-described framework structure defining at least one storage volume 500 arranged below the horizontal rails shown at 554. Storage containers 106 are stacked on top of each other within storage columns shown at 556. The system comprises a plurality of outer walls 501 to separate the storage volume 500 from external conditions, such as temperature and/or humidity. The surrounding outer walls 501 are provided with a channel extending from below the horizontal rails 554 to a first plenum 502 extending horizontally beneath the storage columns. The storage volume 500 is open against the horizontal rails 554 such that remotely operated vehicles or robots shown at 558 may lower and raise storage containers shown at 550 into and out of the storage volume 500. As also shown in Fig. 5, there is a second plenum 503 extending between the outermost storage columns shown at 560 and the outer walls 501.

The automated storage and retrieval system further comprises a second plurality of transversally directing air ducts 504 connected to an at least one fan 505 adapted to suction air from outside of the storage volume 500. The second plurality of transversally directing air ducts 504 is positioned to distribute the air transversally below the horizontal rails 554. This creates a sharp, non-physical boundary, an upper transversal air curtain, between temperature zones such that neither the remotely operated vehicles 558 nor the horizontal rails 554 are exposed to the environment below. A controller 512 determines the speed of the at least one fan 505 such that the upper transversal air curtain keeps the horizontal rails 554 and the container handling vehicles 558 at a suitable temperature.

In some embodiments, the temperature of the air being drawn from outside the storage volume may be in the range -2°C to +10°C or higher. Such an outside temperature would typically be expected when a part of the full automated storage and retrieval system is positioned within a chilled temperature environment or the system is constructed in a location where ambient air temperatures correspond to such temperatures.

The temperature of the air being drawn from outside the storage volume may in some circumstances be too cold to hit the horizontal rails as cold air may cause unwanted condensation on the horizontal rails. For this purpose, the system comprises a heating element 513 to heat up the prohibitively cold air drawn from outside the storage volume before distributing the heated air transversally below the horizontal rails 554. The temperature of the heating element 513 may be controlled by means of a temperature gauge positioned between the heating element 513 and the second plurality of transversally directing air ducts 504.

The automated storage and retrieval system comprises a cooling system 506 adapted to draw air from the first plenum 502, subsequently cool said air and blow cooled air from an output 507 of the cooling system 506 as a cooled airflow. The air may be drawn from the first plenum 502 through an opening 517 between the first plenum 502 and a cooling enclosure comprising the cooling system 506. The cooling enclosure may be arranged inside or outside the outer walls 501. The system comprises a first plurality of transversally directing air ducts 508 adapted to receive the cooled airflow from the cooling system 506 via a first air damper 509. The first plurality of transversal air ducts 508 is adapted to distribute a first portion of the cooled airflow transversally above an uppermost layer of the storage columns shown at 562. This creates a lower transversal air curtain of cooled air, between the upper transversal air curtain, and the storage columns 562.

The cooling system 506 may in one embodiment comprise a chiller to cool the air, and a fan to draw the air from the first plenum 502. The chiller may be for example be an evaporator or a heat exchanger. The chiller may be connected to an evaporator or heat exchanger external to the storage volume 500 to dump heat outside the storage volume 500. However, any suitable cooling system may be used. The first air damper 509 may be in direct connection with the output 507 of the cooling system 506, e.g. via a conduit connecting the first air damper 509 to the output 507. In an alternative embodiment, the output 507 of the cooling system 506 may blow the cooled airflow into the cooling enclosure, and the cooled airflow is provided to the first air damper 509 by a fan drawing the cooled airflow from the cooling enclosure.

When air is drawn from the first plenum 502 through the cooling system 506 an underpressure, or vacuum, is created in the first plenum 502. The magnitude of the underpressure in the void 502 is controlled by a force drawing air into the cooler system 506 and the first portion of the cooled airflow distributed transversally above the uppermost layer of the storage columns 556 by the transversally directing air ducts 508. An overpressure is created above the of the storage columns 556 by the same first plurality of transversally directing air ducts 508. The pressure differential between the overpressure over the storage columns 556 and the underpressure in the first plenum 502, determines the speed of air through the plurality of storage columns 556. A higher pressure differential increases the speed of air and increases the cooling effect of the cooled airflow passing through the plurality of storage columns 556. A lower pressure differential reduces the speed of air and reduces the cooling effect of the cooled airflow passing through the plurality of storage columns 556. The cooled airflow through the first plurality of transversally directing air ducts 508 is determined by the first air damper 509.

For the cooling system 506 to be controlled separately from the cooled airflow passing through the plurality of storage columns 556, the at least one storage volume 500 further comprises a plurality of vertically directing air ducts 510 connected to the output 507 of the cooling system 506 through a second air damper 511. The plurality of vertically directing air ducts 510 is adapted to distribute a second portion of the cooled airflow downwards into the second plenum 503. The first air damper 509 and the second air damper 511 then help to balance the load of the cold airflow across the storage columns 556 and down the sides to provide a relatively constant load for the cooling system 506. The controller 512 is adapted to adjust the first air damper 509 and the second air damper 511 to control the relative distribution of the first portion of the cooled airflow and the second portion of the cooled airflow.

The system may comprise a third air damper 514 arranged between the at least one fan 505 and the second plurality of transversally directed air ducts 504. The third air damper 514 may comprise a pressure sensor. The controller 512 may then be adapted to control the speed of the at least one fan 505 based on a predetermined pressure level. In one embodiment, a frequency converter 515 may control the speed of the at least one fan 505 based on a pressure measured by the pressure sensor, e.g.by outputting a control voltage to the at least one fan 505 corresponding to the measured pressure.

The storage volume 500 may comprise at least one temperature sensor, and the controller described above may be adapted to adjust airflow based on a temperature measured by the at least one temperature sensor.

The system may comprise a raised floor 518 with a plurality of ventilation holes provided between the first plenum 502 and the plurality of storage columns 556. The raised floor 518 may also extend to the outer walls 501, such that the raised floor 518 is provided between the second plenum 503 and the first plenum 502. A total area of each of the plurality of ventilation holes may be configured to increase with the horizontal distance of each of the ventilation holes from the air intake in the first plenum 502. The total area of each of the plurality of ventilation holes may be varied by the number and/or size of ventilation holes. Small and/or few ventilation holes close to the air intake and larger and/or more ventilation holes further away from the air intake will create a more uniform airflow and more uniform cooling within the storage volume. The total area of each of the plurality of ventilation holes may be adjustable, e.g. using an aperture plate over another aperture plate where the two aperture plates are moved relative to each other. The plurality of ventilation holes may be provided by a plurality of perforations in panels forming the raised floor.

In one embodiment, the outer walls 501 each comprise a layer of thermal insulating material 516. A thermal insulating material is a material that has a lower thermal conductivity than general purpose construction materials, such as aluminium, acrylic glass, plywood, plaster and timber. Thermal insulating materials typically have a thermal conductivity below 0.06 Wm⁻¹K⁻¹. Exemplary thermal insulating material includes, but are not limited to, glass wool, rock wool, cellulose, polystyrene foam, urethane foam, vermiculite, perlite and cork. The outer wall may be made of a thermal insulating material, the wall may be covered by an insulating material, or the thermal insulating material may be part of a sandwich wall construction. Outer walls 501 with a layer of thermal insulating material 516 are particularly useful when the difference in storage volume temperatures between two neighbouring storage volumes is too high to control by airflow only.

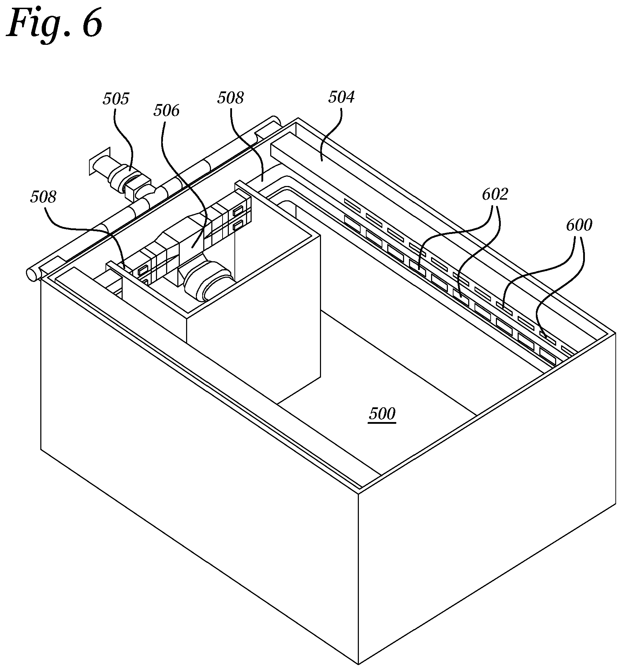

Fig. 6 is a perspective side view of a system according to an embodiment of the present invention and is structurally similar to the schematically shown system of Fig. 5. Accordingly, in addition to ducts and air flow control devices visible in Fig. 6, there is a substantially similar arrangement of ducts and air flow control devices arranged oppositely these. In Fig. 6, the storage grid with its parts, such as framework structure and horizontal rails, of Fig. 5 has been left out. With reference to Figs. 5-6, a storage volume 500 for storing goods holders 550 is provided. A first air release volume 552 is disposed below the horizontal rails 554 and above the storage volume 500. A first transversally directing air duct 508 is positioned to distribute air transversally into the first air release volume 552. As previously discussed, a cooling system 506 comprising a chiller that cools the air is provided. Said chiller supplies cooled air into the air duct 508. The chiller may be for example be an evaporator or a heat exchanger.

An array of air flow control devices 602, each comprising a body provided with a plurality of perforations, is arranged at a respective orifice of the first transversally directing air duct 508. The air is distributed transversally into the first air release volume 552 such that with the air flow control device 602 in position the air duct 508 can produce a first transversal air curtain downstream of the air flow control device 602 in the first air release volume 552. The temperature of the air of the first transversal air curtain is thus stratified.

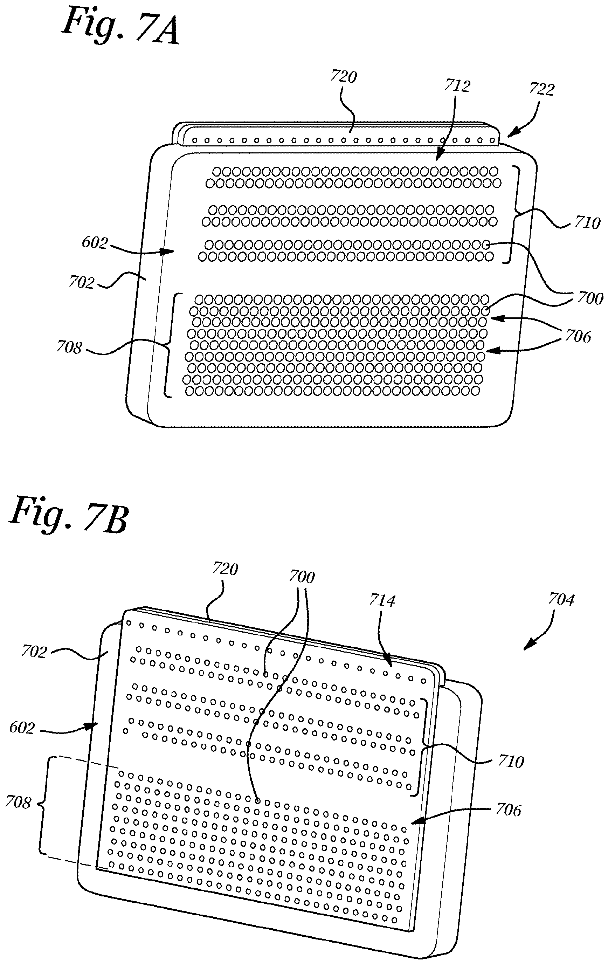

Structural and functional details of the air flow control device 602 are discussed below in connection with Figs. 7a-7b. The amount of air to be introduced into said first air release volume, via the device 602, is controlled by the first air damper 509 shown in Fig. 5. Controlled and continuous air release into the first air release volume 552 through the perforations 700 provided in the body 702 of the air flow control device 400 results in creation of a first transversal air curtain. In particular, when the air exits the first air duct 508 and passes through said perforations 700 it becomes thermally stratified. Accordingly, a plurality of transversally extending, well defined air bands having different temperatures is achieved within the first air curtain. Temperature of the individual air bands decreases in the downward direction 704 of the automated, grid-based storage and retrieval system, i.e. towards the storage volume. By establishing said first transversal air curtain of thermally stratified air, a sharp, transversally extending thermal boundary is created in the storage and retrieval system. More precisely and with particular reference to Fig. 5, the air curtain extends vertically between warmer temperatures at the level of the rail system 554 and lower temperatures of the storage volume 500. Said air curtain creates a thermal boundary provided between the storage volume 500 containing goods holders 550 and the horizontal rails 554 supporting wheels of the remotely operated vehicles 558 such that the vehicles are not exposed to the prohibitively low temperatures. This is achieved without increasing structural complexity of the system, e.g., the storage volume and the region containing horizontal rails and the vehicles do not need to be physically separated.

The above discussed air curtain is highly efficient at separating cold air from warmer air. In other words, the cold air of the storage volume 500 is prevented from mixing with warmer air higher up in the system. This entails significant energy savings as only limited amounts of very cold air, destined for the storage volume 500, need to be introduced into the system in order to compensate for negative effects of inadvertent mixing of cold and warm air. In order to keep mixing of cold and warm air at a minimum, air velocity in the transversal direction at interface of two air curtains/two different temperature zones needs to be relatively low. At said interface, air propagates preferably in a substantially horizontal direction.

Still with reference to Figs. 5-6, air velocity in the temperature-stratified air bands of the first transversal air curtain increases in the downward direction of the automated, grid-based storage and retrieval system. Moreover, in at least one band of the first transversal air curtain, velocity of the air increases in the transversal direction of the automated, grid-based storage and retrieval system.

The system shown in Figs. 5-6 further comprises a second air release volume 605 disposed below the horizontal rails 554 and above the cooling air release volume 405. A second transversally directing air duct 504 is positioned to distribute incoming air transversally into the second air release volume 605. As described in connection with Fig. 5, an air suction device 505, such as a fan, draws air from outside of the storage volume 500 and supplies it to the air duct 504.

An array of second air flow control devices 600, each comprising a body provided with a plurality of perforations, is arranged at a respective orifice of the second transversally directing air duct 504. The amount of air to be introduced into said second air release volume 605, via the device 600, is controlled by the second air damper 511 shown in Fig. 5. The air is distributed transversally into the second air release volume 605 such that the air duct 504 can produce a second transversal air curtain downstream of the second air flow control device 600 in the second air release volume 605. The temperature of the air of the second transversal air curtain is uniform, i.e. non-stratified. In one embodiment, air arriving from the duct 504 is directed slightly upwards by the air flow control device 600 only in an upper region of the second transversal air curtain, i.e. this air flow portion is directed towards guide rails.

Typically, the air of the first transversal air curtain and the air of the second transversal air curtain flow in the same direction. The temperatures of the air of the first transversal air curtain are below 0 °C, ranging approximately between 0 and 30 °C and the temperature of the air of the second transversal air curtain is above 0°C, preferably between 5-10 °C. There is a transversally extending zone positioned between the first transversal air curtain and the second transversal air curtain. At least a section of said zone has an air band having a temperature of 0 °C. In the shown embodiments, vertical height of the first and second air curtains is about 50cm. In this context, it is desirable to bring this vertical height to a minimum without degrading its advantageous properties.

In an alternative embodiment (not shown) to the one shown in Fig. 5, featuring vertically directing air ducts 510 and the second plenum 503, cooling air (having temperature of about - 30 C) is, via a transversally directing air duct and an air flow control device, introduced in a dedicated air release volume positioned below first transversal air curtain. This way of introducing air is analogous to the one described in connection with air control device 602 of Fig. 6. Here and in order to keep mixing of colder and warmer air at a minimum, air velocity in the transversal direction at interface of these different temperature zones needs to be relatively low. At said interface, air propagates preferably in a substantially horizontal direction. Advantageously, it is hereby created a predefined pressure drop over each air flow control device so that carefully controlled amounts of cooling air may be introduced into the storage grid. Hereby, temperature in the storage grid is kept stable and energy consumption is kept at a minimum.

Fig. 7a is a perspective view of an air flow control device 602 in accordance with one embodiment of the present invention.

The air flow control device 602 of Fig. 7a comprises a body 702 provided with a plurality of perforations 700 through which air can be directed. As discussed in connection with Figs. 5-6, said device 600, 602 is arranged at an orifice of a transversally directing air duct positioned to distribute the air transversally into a first or second air release volume 552, 605 such that with the air flow control device in position the air duct can produce a first transversal air curtain downstream of the air flow control device in said first or second air release volume so that temperature of the air of the first transversal air curtain becomes stratified.

In known arrangements, by arranging the air flow control device 602 at the orifice of the air duct, ice build up on the device is easily detected and removed, for instance by means of a dedicated heater (not shown). As discussed below, according to the present approach, a heater is not required.

Still with reference to Fig. 7a, the body 702 of the air flow control device 400 is rectangular and plate-shaped. As discussed above, the air flow control device 602 is preferably made in a thermally-insulating polymer material, for instance in PVC, having a thermal conductivity below 0,06 W/mK. Alternatively, the air flow control device 602 may be cast in XPS (extruded polystyrene) having a suitable density. The air flow control device 602 is devoid of moving parts. Hereby, a robust device is created, the maintenance of which device being greatly facilitated.

In one embodiment, the air flow control device 602 comprises an airflow straightener (not shown) arranged immediately upstream of the air flow control device, when said device is arranged at the orifice of the air duct. In one embodiment, said airflow straightener is structurally integrated with the air flow control device.

Fig. 7b is a view of the air flow control device 602 shown in Fig. 7a. As shown, a row 706 of perforations 700 is made up of a plurality of horizontally aligned perforations extending substantially from a first edge of the body 702 of the device 602 to a second, opposite edge. All perforations 700 of the row in the embodiment shown are uniform. As easily seen, a total cross-sectional area of the perforations 700 in a lower section 708 of the body 702 of the device 602 is larger than a total cross-sectional area of the perforations 420 in an upper section 710 of the body 702 of the device 602. On the more general level, the perforations in the lower section are configured to deliver a greater volume of cooling air in a unit time as compared to the perforations of the upper section.

In embodiments, a vertical cross-section of one perforation 700 is circular-shaped. Furthermore, a first radius of the perforation 700 on a body side 712 facing the first air release volume is larger than a second radius of the perforation on a body side 714 facing away from the first air release volume. By way of example, the diameter of the perforation 700 on the body side 712 facing the first air release volume is 8 mm whereas diameter of the body side 714 facing away from the first air release volume is 4 mm. The perforation 700 may continuously taper in a direction opposite the air flow direction. In further embodiments, the vertical cross-section of a perforation may adopt other shapes, such as square, rectangular, ellipsoid or triangular.

Alternatively, the perforation 700 comprises a first cylindrically-shaped end section associated with the first radius and a second cylindrically-shaped end section associated with the second radius and an intermediate section that continuously tapers in a direction opposite the air flow direction.

Further improvements to known systems can additionally be understood with reference to Figs. 7A and 7B. In particular, it can be seen that a de-icing portion 720 is provided comprising a plurality of second apertures 722 provided in a row parallel to and above the rows of first apertures 706. The apertures can be provided in the main body portion 702 or in an additional portion for example in a back plate including the inlet to apertures 706. In the embodiments shown, the second apertures 720 have the same profile at inlet and outlet ends hence being generally cylindrical. Additionally, in the embodiments shown, the row of second apertures 722 is provided parallel to and above the main body 702 and rows of apertures 700. The first apertures 700 extend through the main body portion 702 such that with air flow control device 602 in position, mounted in the orifice of an air duct to the system, the air duct can produce a first transversal air stream downstream of the air flow control device in the air release volume by controlling a flow of air passing through the first apertures 706, the second apertures 722 being positioned to allow air to flow from the orifice in the duct over a surface of the main body portion 702 of the air flow control device to reduce formation of ice on that surface.

The de-icing portion 720 can comprise additional lines (not shown) of second apertures 722 extending perpendicularly relative to the first line of second apertures 722, for example down the vertical sides of the main body, and positioned to allow air to flow from the orifice in the duct over the surface of the main body portion of the air flow control device to reduce formation of ice on that surface yet further. Providing the de-icing portion peripheral relative to the main body portion 702 provides a pressure differential which enables air flow over the face 712 of the main body 702.

The second apertures 722 have a different configuration from the first apertures 700 which can take one of various forms. For example, the density of surface area of the second apertures in the de-icing portion can be lower than the density of surface area of the first apertures in the main body portion for example by having fewer second apertures 722, or by having reduced cross-sectional area of the second apertures 722. Alternatively, or in addition, the pitch or spacing of the second apertures 722 can be greater than the pitch of the first apertures. Additionally, or alternatively, the outlet ranges of the first apertures at the inner face 712 of the main body 702 can be larger than the out radius of the second apertures 722. Alternatively, again, the outlet periphery of the second apertures can be sharply defined, for example, the boundary between the second aperture and the main body face can be discontinuous for example at a 90° angle and without radiusing. One or more of these approaches can be adopted to creature a pressure drop for example by virtue of the effective smaller radius, density or greater pitch, or because of the sharp boundaries which give rise to a deacceleration and hence pressure drop. The design thus makes the pressure drop across the valve larger than the pressure drop across the air duct which in turn creates equal air flow for each of the air outlets along the freezer and creates air flow across the face 712 over the main body 702 to reduce ice formation.

It will be noted that the device is easily installed and can be inserted into a pre-cut opening in the air duct and glued. It can formed from any appropriate hardened insulation material for easy manufacturing in addition to enhancing avoidance of ice formation via the insulating properties.

As discussed in more detail above, the first apertures 700 can be more closely packed than the first apertures in the upper region of the main body and can have various configurations including a cylindrically-shaped section with a constant radius and truncated conically-shaped section, or a cylindrically-shaped section with a constant radius, as discussed above in one embodiment wherein the constant radius of the first apertures is larger than the constant radius of the second apertures. The radius of the second apertures can be of any appropriate dimension for example in the range 1-6mm, preferably 2-4mm and most preferably 3mm and/or a pitch associated with the second apertures 720 is the range 5-15mm, preferably 8-12mm and most preferably 10mm.

Additionally, as discussed above in more detail, the air flow control device can include a flow-conditioning portion (non-shown) positioned downstream of the main body portion 702 and directly abutting the main body portion 702. The flow conditioning portion can have third apertures to reduce disturbances in the air flow in the air release volume 605, 552. The third apertures can have similar or different profiles to the first and second apertures for example they can be cylindrically shaped with constant radius, the radius being equal in the size to the radius of the first aperture of the conically-shaped section, and can have an identical aperture pattern with the first apertures.

The air flow control device can be positioned in conjunction with an air duct with an automated grid-based storage system, the radius being equal in size to the radius of the first aperture of the conically-shaped section, and can have an identical aperture pattern with the first apertures.

The air flow control device can be position in conjunction with an air duct in an automated grid-based storage and retrieval system of the type described herein and can be of appropriate configuration to match the duct profile for example having a rectangular cross section. An array of air flow control devices can be provided, each mounted in one orifice of an air duct extending along the refrigerated zone and positioned to respectively distribute air transversely into the air release volume.

The device can be mounted in any appropriate manner and operates entirely passively as discussed above, simplifying both insultation and operation of the system as a whole.

It will be seen that various additional advantages can be achieved; and improved transversal air stream creates a thermal boundary between the storage volume and the rails and robots without ice build up being undetected or indeed occurring. Additionally, although the second apertures 722 extend parallel to the first apertures 700, a simple process is provided for allowing air flow along the face 712 of the device to reduce formation or condensate or ice on the surface without performing a defrosting cycle or requiring hot air injection or other heating solutions.

It is to be understood that the above description is intended to be illustrative, and not restrictive. Many other implementations will be apparent to those of skill in the art upon reading and understanding the above description. Although the present disclosure has been described with reference to specific example implementations, it will be recognized that the disclosure is not limited to the implementations described, but can be practiced with modification and alteration within the spirit and scope of the appended claims. Accordingly, the specification and drawings are to be regarded in an illustrative sense rather than a restrictive sense. The scope of the disclosure should, therefore, be determined with reference to the appended claims, along with the full scope of equivalents to which such claims are entitled.

## Claims

1. An air flow control device for controlling an air flow being introduced to a refrigerated zone of a storage volume in a storage and retrieval system, said air flow control device being configured to be mounted in an orifice of an air duct to distribute the air transversally into an air release volume of the refrigerated zone, the flow control device comprising a main body portion having a face with first airflow apertures of a first configuration, wherein said air flow control device further comprises a de-icing portion comprising second apertures having a second configuration arranged to create a pressure differential across the air duct face.

2. An air flow control device of claim 1 wherein the storage and retrieval system comprises an automated, grid-based storage and retrieval system, the storage volume being for storing stacks of goods holders, the first apertures extending through the main body portion such that with the air flow control device in position, mounted in the orifice of the air duct, the air duct can produce a first transversal air stream downstream of the air flow control device in the air release volume by controlling a flow of air passing through said first apertures, the second apertures comprising a line of second apertures, positioned to allow air to flow from the orifice in the duct over a surface of the main body portion of the air flow control device to reduce formation of ice on that surface.

3. An air flow control device of claim 1 or 2, wherein the de-icing portion comprises a further line of second apertures extending perpendicularly relative to a first line of second apertures and positioned to allow air to flow from the orifice in the duct over a surface of the main body portion of the air flow control device to reduce formation of ice on that surface.

4. An air flow control device of any of the preceding claims, wherein the de-icing portion is peripheral relative to the main body portion.

5. An air flow control device of any of the preceding claims, wherein the second configuration comprises at least one of:
the density of surface area of the second apertures in the de-icing portion is lower than density of surface area of the first apertures in the main body portion;
the pitch of the second apertures in the de-icing portion is greater than the pitch of the first apertures in the main body portion;
the outlet radius of the first apertures is larger than the outlet radius of the second apertures;
the outlet periphery of the second apertures is sharply defined; or
the boundary between the second aperture and main body face is discontinuous.

6. An air flow control device of any of the preceding claims, wherein the first apertures in a lower region of the main body are more closely packed than the first apertures in an upper region of the main body, or wherein the first apertures have a cylindrically-shaped section with a constant radius and a truncated conically-shaped section, preferably wherein the second apertures have a cylindrically-shaped section with a constant radius, preferably wherein the constant radius of the first apertures is larger than the constant radius of the second apertures.

7. An air flow control device of claim 6, wherein the radius of the second apertures is in the range 1-6 mm, preferably 2-4 mm and most preferred 3 mm, or wherein a pitch associated with second apertures is in the range 5-15 mm, preferably 8-12 mm and most preferred 10 mm.

8. An air flow control device of any of the preceding claims, wherein said air flow control device comprises a flow-conditioning portion positioned downstream of the main body portion and directly abutting said main body portion, said flow-conditioning portion having third apertures to reduce disturbances in the air flow in the air release volume, preferably wherein the third apertures are cylindrically-shaped and have constant radius, preferably wherein the radius of the third aperture of the flow-conditioning portion and the radius of the first aperture of the conically-shaped section at the interface of the two portions are equal in size, preferably wherein the aperture pattern of the flow-conditioning portion and the main body portion are identical and the third apertures are aligned with the first apertures.

9. An automated, grid-based storage and retrieval system, comprising:
an air duct positioned to distribute air transversally into a first air release volume,
an air flow control device in accordance with any of the claims 1-8 mounted to an orifice in the air duct.

10. An automated, grid-based storage and retrieval system further comprising:
a framework structure comprising vertically extending members and a grid of horizontal rails provided at upper ends of said vertical members, wherein remotely operated vehicles for handling goods holders operate on top of the grid, the framework structure defining:
a storage volume disposed below the horizontal rails for storing goods holders, and
an air release volume disposed below the horizontal rails and above the storage volume.

11. An automated, grid-based storage and retrieval system of claim 9 or 10 wherein the air flow control device is for fitting to the air duct having a rectangular cross-section.

12. An automated, grid-based storage and retrieval system of any of claims 9 to 11, wherein said system comprises an array of air flow control devices, each mounted in one orifice of the air duct extending along a side of a refrigerated zone and positioned to distribute air transversally into the air release volume.

## Amended claims

### Amended claims in accordance with Rule 137(2) EPC.

1. An air flow control device (602) for controlling an air flow being introduced to a refrigerated zone of a storage volume (500) in a storage and retrieval system, said air flow control device being configured to be mounted in an orifice of an air duct (508) to distribute the air transversally into an air release volume (552) of the refrigerated zone, the flow control device comprising a main body portion (702) having a face (712) with first airflow apertures (706) of a first configuration, wherein said air flow control device further comprises a de-icing portion (720) peripheral relative to the main body portion comprising second apertures (722) having a second configuration arranged to create a pressure differential over the face of the main body,
wherein the second configuration comprises at least one of:
the density of surface area of the second apertures in the de-icing portion is lower than density of surface area of the first apertures in the main body portion;
the pitch of the second apertures is greater than the pitch of the first apertures;
the outlet radius of the first apertures is larger than the outlet radius of the second apertures;
the outlet periphery of the second apertures is sharply defined; or
the boundary between the second aperture and main body face is discontinuous.

2. An air flow control device of claim 1 wherein the storage and retrieval system comprises an automated, grid-based storage and retrieval system, the storage volume being for storing stacks of goods holders, the first apertures extending through the main body portion such that with the air flow control device in position, mounted in the orifice of the air duct, the air duct can produce a first transversal air stream downstream of the air flow control device in the air release volume by controlling a flow of air passing through said first apertures, the second apertures comprising a line of second apertures, positioned to allow air to flow from the orifice in the duct over a surface of the main body portion of the air flow control device to reduce formation of ice on that surface.

3. An air flow control device of claim 1 or 2, wherein the de-icing portion comprises a further line of second apertures extending perpendicularly relative to a first line of second apertures and positioned to allow air to flow from the orifice in the duct over a surface of the main body portion of the air flow control device to reduce formation of ice on that surface.

4. An air flow control device of any of the preceding claims, wherein the de-icing portion is peripheral relative to the main body portion.

5. An air flow control device of any of the preceding claims, wherein the first apertures in a lower region of the main body are more closely packed than the first apertures in an upper region of the main body, or wherein the first apertures have a cylindrically-shaped section with a constant radius and a truncated conically-shaped section, preferably wherein the second apertures have a cylindrically-shaped section with a constant radius, preferably wherein the constant radius of the first apertures is larger than the constant radius of the second apertures.

6. An air flow control device of claim 5, wherein the radius of the second apertures is in the range 1-6 mm, preferably 2-4 mm and most preferred 3 mm, or wherein a pitch associated with second apertures is in the range 5-15 mm, preferably 8-12 mm and most preferred 10 mm.

7. An air flow control device of any of the preceding claims, wherein said air flow control device comprises a flow-conditioning portion positioned downstream of the main body portion and directly abutting said main body portion, said flow-conditioning portion having third apertures to reduce disturbances in the air flow in the air release volume, preferably wherein the third apertures are cylindrically-shaped and have constant radius, preferably wherein the radius of the third aperture of the flow-conditioning portion and the radius of the first aperture of the conically-shaped section at the interface of the two portions are equal in size, preferably wherein the aperture pattern of the flow-conditioning portion and the main body portion are identical and the third apertures are aligned with the first apertures.

8. An automated, grid-based storage and retrieval system, comprising:
an air duct positioned to distribute air transversally into a first air release volume,
an air flow control device in accordance with any of the claims 1-7 mounted to an orifice in the air duct.

9. An automated, grid-based storage and retrieval system further comprising:
a framework structure comprising vertically extending members and a grid of horizontal rails provided at upper ends of said vertical members, wherein remotely operated vehicles for handling goods holders operate on top of the grid, the framework structure defining:
a storage volume disposed below the horizontal rails for storing goods holders, and
an air release volume disposed below the horizontal rails and above the storage volume.

10. An automated, grid-based storage and retrieval system of claim 8 or 9 wherein the air flow control device is for fitting to the air duct having a rectangular cross-section.

11. An automated, grid-based storage and retrieval system of any of claims 8 to 10, wherein said system comprises an array of air flow control devices, each mounted in one orifice of the air duct extending along a side of a refrigerated zone and positioned to distribute air transversally into the air release volume.
